# EUROPEAN PATENT APPLICATION

(11) **EP 4 832 341 A1**
(43) Date of publication of application: **28.10.2026**
(21) Application number: 26165780.3
(22) Date of filing: 18.03.2026
(51) Int. Cl.: H02S 20/23, F24S 25/61, H02S 20/24, F24S 25/00, F24S 25/60

(54) **A STATIONARY MOUNTING FOR A PHOTOVOLTAIC PANEL**

(30) Priority: 22.04.2025 IE S20250168
(71) Applicant: Ennis, Matthew, County Wexford (IE)
(72) Inventor: Ennis, Matthew, County Wexford (IE)
(74) Representative: Ryan, John Mary

(57) **Abstract**

A stationary mounting (10) for a photovoltaic panel for fixing on a flat roof (29), which flat roof (29) is covered with a waterproof membrane (25), comprises a flat metal base plate (11), a threaded stud (15) welded to the base plate (11) and is upstanding therefrom. The base plate 11 is bonded, in use, to the waterproof membrane (25). A spacer (18) is attachable at one end thereof to the threaded stud (15), a circular piece (20) of membrane material, which is compatible with the waterproof membrane (25), is positioned between the base plate (11) and the spacer (18), with the threaded stud (15) passing through a central aperture (21) in the circular piece (20). A threaded opening (22), at the opposite end (23), of the spacer (18), is used for attaching the photovoltaic panel to the stationary mounting (10). The threaded stud (15), the threaded aperture (26) and the threaded opening (22) all lie on the same axis.

## Description

### Technical Field

This invention relates to a stationary mounting for a photovoltaic panel and, in particular, to a stationary mounting for a photovoltaic panel for fixing on a flat roof, which flat roof is covered with a waterproof membrane.

### Background Art

Stationary mountings for photovoltaic panels for fixing to a flat roof of a building are known and have been used for many years. When fixing such a stationary mounting to a flat roof, which has already been covered with a waterproof membrane, it is essential that the watertightness of the waterproof membrane is not compromised, as this could void any guarantee attached to the original installation of the waterproof membrane.

European Patent No. 1 992 017 describes a fastening device for fastening objects, in particular for fastening structures, such as photovoltaic systems, on sealed outer building surfaces, such as, for example, flat roof constructions. The device is either fixed to the flat roof structure before the seal is applied, or where the seal is already in place, it has to be opened, so that the device can be fixed to the roof surface below the seal. In either case the device will pass through the seal with the roof being re-sealed using a sealing collar which extends around the device location and is sealed to the roof seal.

European Patent No. 2 855 794 discloses a device for fixing an item to a building structure, for example for use as a roof fixing. The device consists of a base plate having a projecting member projecting from one side of it, for example a threaded stud or bolt, and an impermeable cover member, for example in the form of a solid block which can be threaded on to the projecting member. The cover member compresses a piece waterproof membrane located between it and the base plate to form a waterproof seal. The piece of waterproof membrane extends past the edges of the base plate and its projecting edges are sealed to the structure.

Where the device is fitted to a flat roof covered with a waterproof membrane, the piece of waterproof membrane is sealed to the waterproof membrane covering the flat roof. The device also requires use of an incompressible spacer member to be inserted between the upper surface of the base plate and the cover member. The thickness of the spacer member exactly defines and consistently maintains the degree of compression of the piece of waterproof membrane between the cover member and the base plate sufficient to provide a waterproof seal. Thus, the piece of waterproof membrane and the particular spacer member are matched to the particular waterproof membrane already fitted to the roof. Then the piece of waterproof membrane and the particular spacer member must be factory-fitted to the device before the device is shipped to the client.

It is an object of the present invention to overcome the disadvantages of the devices hereinbefore described.

### Disclosure of Invention

Thus, the invention provides a stationary mounting for a photovoltaic panel for fixing on a flat roof, which flat roof is covered with a waterproof membrane, the stationary mounting comprising a flat metal base plate, an attaching fastener welded to the base plate at the centre thereof and upstanding from one side of the base plate, with the other side of the base plate, in use, being attachable by a waterproof bond to the waterproof membrane, a spacer attachable at one end thereof to the attaching fastener, so as to form a watertight bond with the one side of the base plate, and the spacer having means at the opposite end thereof for attaching the photovoltaic panel thereto.

An advantage of the stationary mounting in accordance with the invention is that, as the metal base plate is flat, it can be bonded to both the underlying waterproof membrane and to the spacer, with the bonds in each case, being watertight.

Preferably, the base plate is manufactured from stainless steel and has a plurality of through-holes, around the periphery thereof, for receiving base plate fasteners for fixing the base plate, through the waterproof membrane, to the underlying flat roof.

An advantage of the plurality of through-holes in the base plate is that the bond between the base plate and the underlying waterproof membrane can be strengthened by the addition of base plate fasteners, which bind the base plate to the roof structure under the waterproof membrane.

The choice of stainless steel material used for the base plate depends on the environment in which the stationary mounting will be used. Thus, if the roof is located near the sea or where the air quality is poor, then a food grade stainless steel such as 304 grade should be used.

Further, preferably, the base plate is generally circular in shape and the plurality of through-holes is equally spaced around the periphery of the base plate.

An advantage of the circularly shaped base plate, with through-holes equally spaced around the centre, is that the radial distance between each through-hole and the attaching fastener at the centre of the base plate is the same. Thus, by evenly fixing base plate fasteners around the periphery of the base plate, any load applied to the stationary mounting, in a direction perpendicular to the roof, will be evenly distributed around the base plate.

Suitably the attaching fastener is a threaded stud.

An advantage of a threaded stud is that the spacer can be attached to the stud in a controlled manner.

Preferably, the spacer is a cylindrical block having a threaded aperture located at the centre of one end thereof, for receiving the threaded stud, with the threaded aperture being longer than the stud.

An advantage of the threaded aperture is that in use, the spacer can be screwed onto the attaching fastener until the spacer contacts the base plate to bond the two together.

Further, preferably, the attaching means at the opposite end of the spacer is a threaded opening.

An advantage of this aspect of the invention is that the threaded opening is a versatile means for attaching a photovoltaic panel to the stationary mounting.

Suitably, the threaded stud, the threaded aperture and the threaded opening lie on the same axis, when the stationary mounting is assembled.

An advantage of this alignment of the parts of the stationary mounting is that attaching a photovoltaic panel to a number of stationary mountings is straightforward as the threaded openings on each stationary mounting will be easily aligned, without requiring any adjustment of any of the spacers.

Preferably, in use, a piece of compatible membrane material is positioned between the base plate and the spacer, with the dimensions of the piece of compatible membrane material being sufficient to extend beyond the footprint of the base plate.

An advantage of this aspect of the invention is that the base plate and the base plate fasteners will be protected from the elements by the piece of compatible membrane material, while at the same time providing an additional waterproof bond between the stationary mounting and the waterproof membrane covering the roof.

A further advantage of the use of the piece of compatible membrane is that, as the base plate is covered and protected from the air, the grade of stainless steel used to manufacture the base plate can be of a lower quality than food grade, where appropriate.

Suitably, the spacer is fabricated from a rigid PVC (polyvinyl chloride) material.

An advantage of the use of a rigid PVC material is that the spacer can be moulded from the material, or, alternatively, the spacer can be cut from a length of rigid PVC rod with the threaded aperture and the threaded opening being drilled into the spacer.

The invention will be further illustrated by the following description of an embodiment thereof, given by way of example only with reference to the accompanying drawings in which:

### Brief Description of Drawing

Fig. 1 is an exploded view of a stationary mounting for a photovoltaic panel in accordance with the invention;
Fig. 2 is a perspective view of the stationary mounting of Fig. 1, fixed in position on a flat roof;
Fig. 3 is an enlarged view of the spacer shown in Fig. 1;
Fig.4 is a cross-section on line IV - IV of Fig. 3; and
Fig. 5 is a cross-section on line V - V of Fig. 2.

### Best Mode for Carrying out the Invention

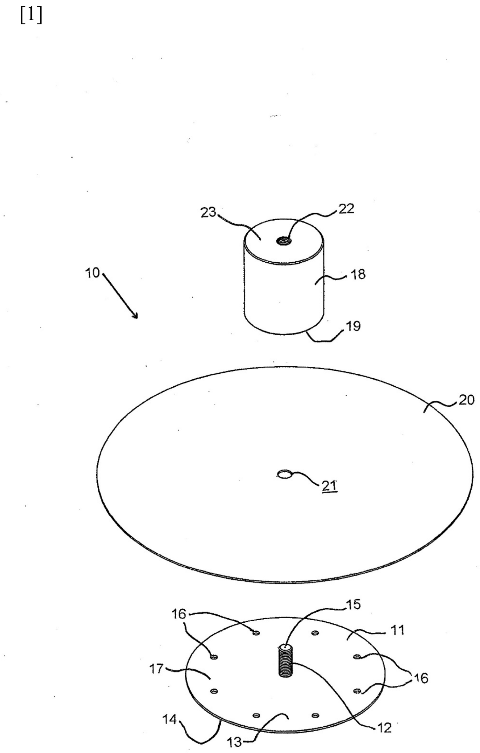

Referring to Fig.1, there is illustrated generally at 10 a stationary mounting for a photovoltaic panel for fixing on a flat roof, which flat roof is covered with a waterproof membrane. The stationary mounting has a flat metal base plate 11, an attaching fastener 12 welded to the base plate 11 at the centre thereof and upstanding from one side 13 of the base plate 11. The other side 14 of the base plate 11 is bonded, in use, to the waterproof membrane (not shown). The base plate 11 is manufactured from stainless steel and the fastener 12 is a threaded stud 15.

The base plate 11 is generally circular and has a plurality of through-holes 16, around the periphery 17 thereof, for receiving base plate fasteners (not shown) for fixing the base plate 11, in use, through the waterproof membrane (not shown), to the underlying flat roof (not shown).

A spacer 18 is a cylindrical block fabricated from rigid PVC (polyvinyl chloride) material. The spacer 18 is attached, at one end 19, to the threaded stud 15 to assemble the stationary mounting 10, and a circular piece 20 of membrane material, which is compatible with the waterproof membrane (not shown), is positioned between the base plate 11 and the spacer 18, with the threaded stud 15 passing through a central aperture 21 in the circular piece 20. An attaching means is provided in in the form of a threaded opening 22, at the opposite end 23, of the spacer 18, which threaded opening 22 is used for attaching the photovoltaic panel to the stationary mounting 10.

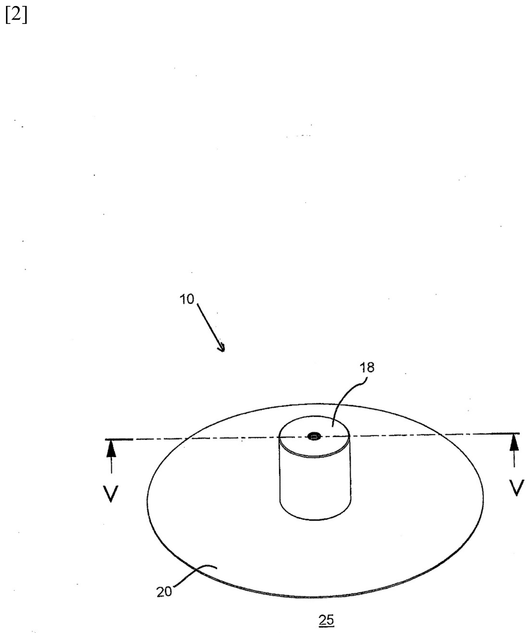

Referring to Fig. 2, the stationary mounting 10 of Fig. 1 is shown fixed to a waterproof membrane 25. The spacer 18 is bonded to the circular piece 20 of membrane material, with the dimensions of the circular piece 20 being sufficient to extend beyond the footprint of the base plate 11, which is hidden thereunder.

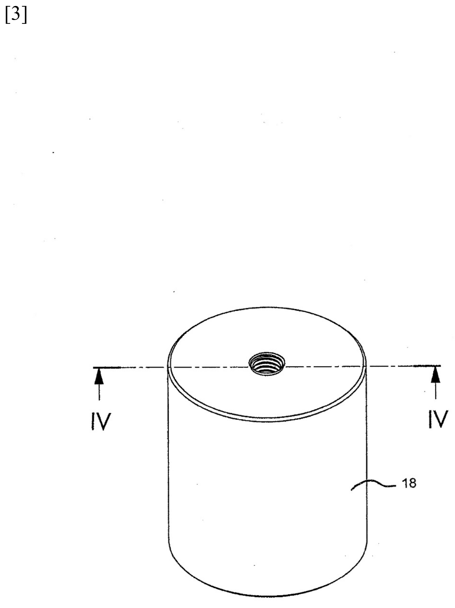

Referring to Fig. 3, the spacer 18 is shown in an enlarged view.

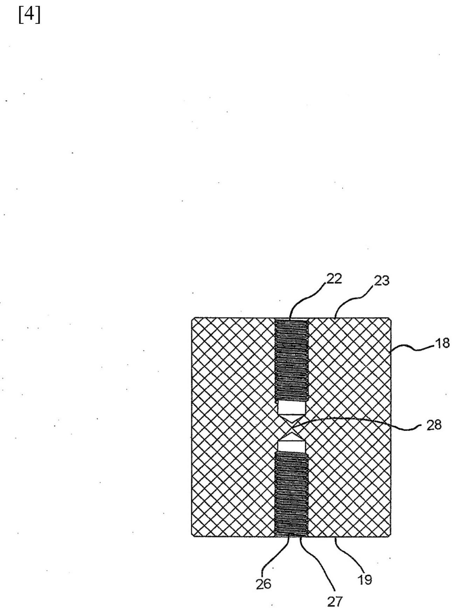

Referring to Fig. 4, which is a cross-section on line IV - IV of Fig. 3, the spacer 18 has a threaded aperture 26 at the centre 27 of end 19 thereof, and the threaded opening 22, at the opposite end 23, of the spacer 18, can be seen, with both the threaded aperture 26 and the threaded opening 22 lying along the same axis but not meeting at the centre 28 of the spacer 18.

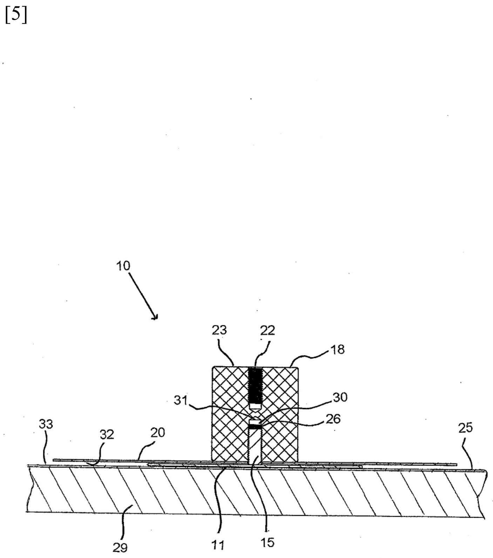

Referring to Fig. 5, which is a cross-section on line V - V of Fig. 2, the stationary mounting 10 is fixed in place on the waterproof membrane 25 covering the flat roof 29. The spacer 18 is bonded to the circular piece of waterproof membrane 20, which in turn is bonded to the base plate 11, beyond which it extends. Undersurface 32 of the circular piece of waterproof membrane 20 has yet to be sealed to surface 33 of the waterproof membrane 25. The threaded stud 15 is screwed tight in the threaded aperture 26 leaving a space 30 between the threaded stud 15 and end 31 of the threaded aperture 26. The threaded stud 15, the threaded aperture 26 and the threaded opening 22 all lie on the same axis.

## Claims

1. A stationary mounting for a photovoltaic panel for fixing on a flat roof, which flat roof is covered with a waterproof membrane, the stationary mounting comprising a flat metal base plate, an attaching fastener welded to the base plate at the centre thereof and upstanding from one side of the base plate, with the other side of the base plate, in use, being attachable by a waterproof bond to the waterproof membrane, a spacer attachable at one end thereof to the attaching fastener, so as to form a watertight bond with the one side of the base plate, and the spacer having means at the opposite end thereof for attaching the photovoltaic panel thereto.

2. A stationary mounting according to Claim 1, wherein the base plate is manufactured from stainless steel and has a plurality of through-holes, around the periphery thereof, for receiving base plate fasteners for fixing the base plate, through the waterproof membrane, to the underlying flat roof.

3. A stationary mounting according to Claim 2, wherein the base plate is generally circular in shape and wherein the plurality of through-holes is equally spaced around the periphery of the base plate.

4. A stationary mounting according to any preceding claim,
wherein the attaching fastener is a threaded stud.

5. A stationary mounting according to Claim 4, wherein the spacer is a cylindrical block having a threaded aperture located at the centre of one end thereof, for receiving the threaded stud, with the threaded aperture being longer than the stud.

6. A stationary mounting according to Claim 5, wherein the attaching means at the opposite end of the spacer is a threaded opening.

7. A stationary mounting according to Claim 6, wherein the threaded stud, the threaded aperture and the threaded opening lie on the same axis, when the stationary mounting is assembled.

8. A stationary mounting according to any preceding claim, wherein, in use, a piece of compatible membrane material is positioned between the base plate and the spacer, with the dimensions of the piece of compatible membrane material being sufficient to extend beyond the footprint of the base plate.

9. A stationary mounting according to any preceding claim,
wherein the spacer is fabricated from rigid PVC (polyvinyl chloride) material.
